# EUROPEAN PATENT APPLICATION

(11) **EP 4 613 094 A1**
(43) Date of publication of application: **10.09.2025**
(21) Application number: 23911783.1
(22) Date of filing: 15.12.2023
(51) Int. Cl.: A01K 61/80

(54) **FEEDING DEVICE**

(30) Priority: 26.12.2022 JP 2022208866
(71) Applicant: Softbank Corp., Tokyo 105-7529 (JP)
(72) Inventor: ISHIWAKA, Yuko, Tokyo 105-7529 (JP); YASUI, Gaku, Tokyo 105-7529 (JP); TONE, Tadayuki, Tokyo 105-7529 (JP); YOSHIDA, Tomohiro, Tokyo 105-7529 (JP)
(74) Representative: SSM Sandmair
(86) International application number: PCT/JP2023/045076
(87) International publication number: WO 2024/143002

(57) **Abstract**

A feeding apparatus (10) includes a driving unit (11) that is arranged above a water surface, a driven unit (12) that is arranged in water, a support unit (13) that connects the driving unit (11) and the driven unit (12), a rotary unit (14) that is extended around the driving unit (11) and the driven unit (12) and rotates between the driving unit (11) and the driven unit (12) with a driving force that is given from the driving unit (11), a feeding box (20) that is an openable and closable box body, is attached to the rotary unit (14), and moves back and force between the driving unit (11) and the driven unit (12) with rotation of the rotary unit (14), and an opening portion (131) that is arranged on the support unit (13) at an arbitrary position in water and opens the feeding box (20) that moves from the driving unit (11) to the driven unit (12).

## Description

### Field

The present invention relates to a feeding apparatus.

### Background

Conventionally, an apparatus that scatters food from above to a water surface has been known as a feeding apparatus that is installed in a breeding farm, such as a fish tank for breeding fish, and that feeds fish that is present in water (for example, see Patent Literatures 1 to 3).

### Citation List

### Patent Literature

Patent Literature 1: Japanese Laid-open Patent Publication No. H4-75544
Patent Literature 2: Japanese Laid-open Patent Publication No. H4-183341
Patent Literature 3: Japanese Laid-open Patent Publication No. 2003-158949

### Summary

### Technical Problem

However, in the conventional feeding apparatus as described above, the food that has been scattered from above stays around the water surface, and does not reach fish that is present at a predetermined depth due to the influence of water temperature, an amount of oxygen (dissolved oxygen) that is dissolved in water, or the like.

The present invention has been conceived in view of the foregoing situation, and an object is to provide a feeding apparatus that is able to feed fish at an arbitrary depth in accordance with a situation of a fish breeding farm.

### Solution to Problem

A feeding apparatus according to one embodiment includes a driving unit, a driven unit, a support unit, a rotary unit, a feeding box, and an opening portion. The driving unit is arranged above a water surface in a breeding farm for breeding fish. The driven unit is arranged in water in the breeding farm. The support unit connects the driving unit and the driven unit. The rotary unit has an endless shape, is extended around the driving unit and the driven unit, and rotates between the driving unit and the driven unit with a driving force that is given from the driving unit. The feeding box is an openable and closable box body for storing food for the fish, is attached to the rotary unit, and moves back and force between the driving unit and the driven unit with rotation of the rotary unit. The opening portion is arranged on the support unit at an arbitrary position in water and that opens, to feed the fish, the feeding box that moves from the driving unit to the driven unit.

### Advantageous Effects of Invention

According to one aspect of embodiments, it is possible to feed fish at an arbitrary depth in accordance with a situation of a fish breeding farm.

### Brief Description of Drawings

FIG. 1 is a schematic perspective view illustrating an installation state of a feeding apparatus according to one embodiment.
FIG. 2 is a schematic perspective view illustrating an overall configuration of the feeding apparatus according to one embodiment.
FIG. 3 is a first schematic perspective view illustrating a configuration of a feeding box.
FIG. 4 is a second schematic perspective view illustrating the configuration of the feeding box.
FIG. 5 is a third schematic perspective view illustrating the configuration of the feeding box.
FIG. 6 is an explanatory diagram of a feeding pattern in the feeding apparatus.
FIG. 7 is an explanatory diagram of food supply operation in the feeding apparatus.

### Description of Embodiments

Embodiments of a feeding apparatus disclosed in the present application will be described in detail below with reference to the accompanying drawings. Meanwhile, the present invention is not limited by the embodiments described below.

### Installation state of feeding apparatus

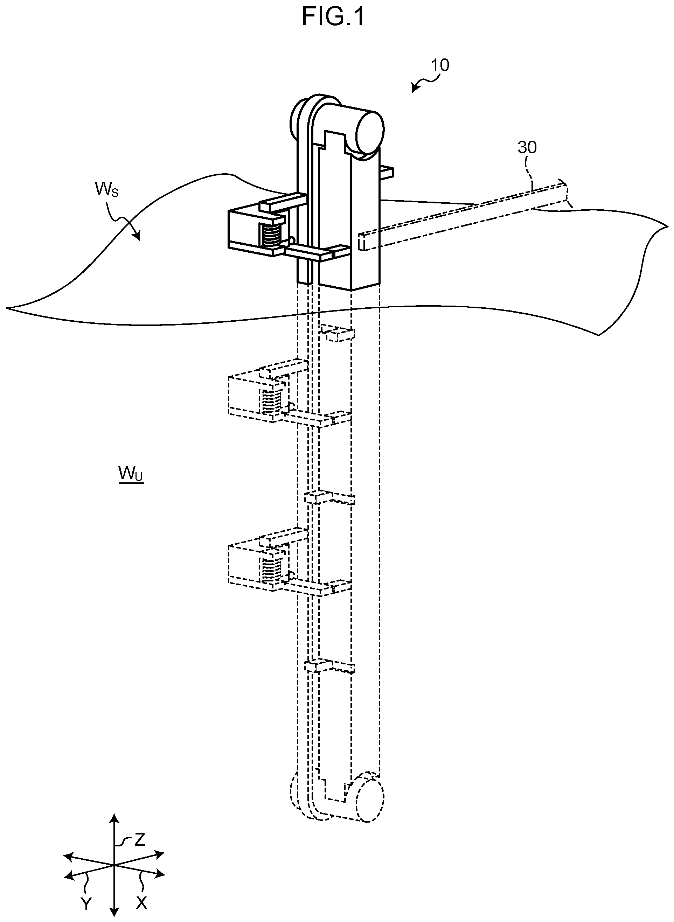

First, an installation state of a feeding apparatus 10 according to one embodiment will be described with reference to FIG. 1. FIG. 1 is a schematic perspective view illustrating the installation state of the feeding apparatus 10 according to one embodiment.

Meanwhile, in each of the drawings including FIG. 1, a three-dimensional orthogonal coordinate system including a Z axis in which a vertically upward (upward) direction is adopted as a positive direction is illustrated.

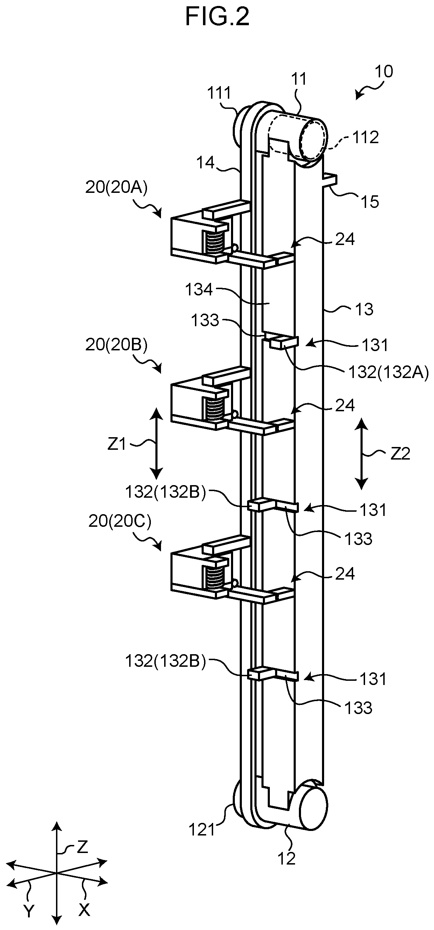

As illustrated in FIG. 1, the feeding apparatus 10 is installed in a breeding farm, such as a fish tank, for breeding fish. The single or the plurality of feeding apparatuses 10 are installed at arbitrary positions in the breeding farm. The feeding apparatus 10 is installed via a fixing frame 30, for example. One end portion of the fixing frame 30 is fixed to a support unit 13 (see FIG. 2) of the feeding apparatus 10 (to be described later), and the other end portion is fixed to a fixed portion (not illustrated), such as a wall outside the breeding farm, for example.

Furthermore, an upper portion of the feeding apparatus 10 is arranged above a water surface W_{S} in the installation state in the breeding farm. In a portion (upper portion) of the feeding apparatus 10 above the water surface W_{S}, a driving system, such as a driving unit 11 (to be described later), a mechanism for supplying food to feeding boxes 20 (to be described later), and the like are arranged. Portions other than the portion (upper portion) of the feeding apparatus 10 above the water surface W_{S} are arranged in water.

### Overall configuration of feeding apparatus

An overall configuration of the feeding apparatus 10 will be described below with reference to FIG. 2. FIG. 2 is a schematic perspective view illustrating the overall configuration of the feeding apparatus 10 according to one embodiment.

As illustrated in FIG. 2, the feeding apparatus 10 includes the driving unit 11, a driven unit 12, a support unit 13, a rotary unit 14, the feeding boxes 20, and opening portions 131. The driving unit 11 includes a driving pulley 111 and a driving motor 112. The driving pulley 111 rotates to rotate the rotary unit 14 (to be described later). The driving pulley 111 transmits a driving force to the rotary unit 14.

The driving motor 112 applies a driving force to the driving pulley 111. The driving motor 112 causes the driving pulley 111 to rotate in a predetermined direction. In the feeding apparatus 10, the rotary unit 14 is rotated by the driving force of the driving motor 112, so that it is possible to automate feeding to fish. The driving unit 11 is arranged above the water surface W_{S} (see FIG. 1) in the installation state of the feeding apparatus 10. By arranging the driving unit 11 above the water surface W_{S}, it is possible to prevent the driving system from water exposure.

The driven unit 12 includes a driven pulley 121. The driven pulley 121 rotates in accordance with the rotation of the driving pulley 111. The driven pulley 121 is biased in a direction (the same direction as a forward direction Z1 (to be described later)) that is separated from the driving pulley 111 so as to apply tension to the rotary unit 14 between the driven pulley 121 and the driving pulley 111 in a state in which the rotary unit 14 is extended around the driven pulley 121 and the driving pulley 111. The driven unit 12 is arranged in water W_{U} (see FIG. 1) in the installation state of the feeding apparatus 10.

The support unit 13 is a rectangular pillar member and arranged between the driving unit 11 and the driven unit 12 so as to connect the driving unit 11 and the driven unit 12. The opening portions 131 and a second protrusion 15 are included. The opening portions 131 are arranged on one surface 134 among the surface 134 and a surface 135 (see FIG. 10) that are arranged along a second orthogonal direction Y (to be described later) in the support unit 13. Meanwhile, the opening portions 131 will be described later with reference to FIG. **2****.**

The second protrusion 15 is arranged on the other surface 135 that is an opposite surface of the one surface 134 among the surfaces 134 and 135 of the support unit 13 (see FIG. 10). Meanwhile, the second protrusion 15 will be described later with reference to FIG. 10.

The rotary unit 14 is, for example, an endless belt. The rotary unit 14 is extended around the driving pulley 111 and the driven pulley 121. The rotary unit 14 rotates in an endless track between the driving pulley 111 and the driven pulley 121 by a driving force that is transmitted from the driving pulley 111.

The feeding boxes 20 are box bodies that accommodate food for fish. The feeding boxes 20 are arranged in an openable and closable manner. The feeding boxes 20 are mounted on the rotary unit 14. The feeding boxes 20 are mounted on the rotary unit 14 so as to protrude from an outer periphery of the rotary unit 14 toward the second orthogonal direction Y. The feeding boxes 20 that are mounted on the rotary unit 14 move forward and backward between the driving unit 11 (the driving pulley 111) and the driven unit 12 (the driven pulley 121) with the rotation of the rotary unit 14.

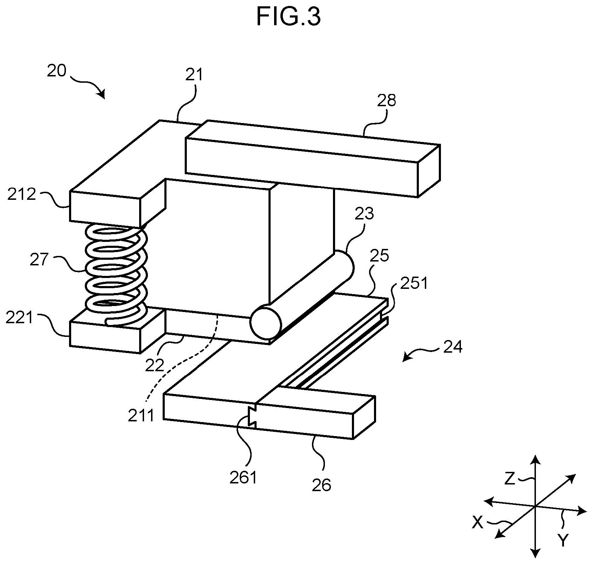

The plurality of feeding boxes 20 are mounted on the rotary unit 14 (in the example illustrated in the drawings, the three feeding boxes (20A, 20B, and 20C) at different positions (depths)). The feeding boxes 20 are arranged at predetermined intervals in the forward direction Z1 among moving directions of the feeding boxes 20. Meanwhile, it may be possible to mount the single feeding box 20 on the rotary unit 14. Further, details of the feeding boxes 20 will be described later with reference to FIGS. 3 to 5.

The opening portions 131 are arranged at arbitrary positions of the support unit 13 in water. The opening portions 131 are arranged on the one surface 134 of the support unit 13 at predetermined intervals along the forward direction Z1 of the feeding boxes 20. When the feeding boxes 20 that move from the driving unit 11 to the driven unit 12, that is, that move in the forward direction Z1, arrive at the opening portions 131, the opening portions 131 open the feeding boxes 20.

The opening portions 131 include first protrusions 132 and attachment gutters 133. The first protrusions 132 protrude in a direction that crosses the forward direction Z1. The first protrusions 132 protrude from the support unit 13 in a first orthogonal direction X that is perpendicular to the forward direction Z1. Further, the first protrusions 132 protrude from a part of the support unit 13 in the second orthogonal direction Y that is perpendicular to each of the forward direction Z1 and the first orthogonal direction X. The first protrusions 132 come into contact with protruding portions 24 (to be described later), with respect to the feeding boxes 20 that move in the forward direction Z1.

The attachment gutters 133 are formed so as to extend in the first orthogonal direction X at arbitrary positions in the one surface 134 of the support unit 13. The attachment gutters 133 are arranged at a plurality of positions in the forward direction Z1. The attachment gutters 133 are mounted by inserting the first protrusions 132 from the second orthogonal direction **Y.** The first protrusions 132 are slidable in the second orthogonal direction Y in the attachment gutters 133 with respect to the support unit 13, and therefore, it is possible to change a position to three positions, such as one end portion, another end portion, and a middle portion, of each of the attachment gutters 133.

In this manner, the first protrusions 132 are slidable with respect to the support unit 13. Further, the first protrusions 132 are attachable to a plurality of positions in the forward direction Z1.

Therefore, in the feeding apparatus 10, the plurality of feeding boxes 20 are mounted in the forward direction Z1 with respect to the rotary unit 14, and the plurality of first protrusions 132 in the opening portions 131 are mounted at a plurality of positions in the forward direction Z1 with respect to the support unit 13. In the feeding apparatus 10, as illustrated in FIG. 2, for example, at least one of the first protrusions 132 comes into contact with a protruding piece 26 and opens the feeding box 20.

In this manner, in the feeding apparatus 10, the rotary unit 14 rotates with the aid of the driving force that is transmitted from the driving pulley 111, and the feeding boxes 20 move in the forward direction Z1 in accordance with the rotation of the rotary unit 14. When the feeding boxes move in the forward direction Z1 and the feeding boxes 20 arrive at the opening portions 131 located at arbitrary positions (depths), the opening portions 131 open the feeding boxes 20. When the feeding boxes 20 are opened, food is discharged from the feeding boxes 20. With this configuration, it is possible to feed the fish at arbitrary positions (depths) in water. Meanwhile, the feeding boxes 20 from which the food has been discharged pass by the driven unit 12, change a movement route from the forward direction Z1, and move to a backward direction Z2 toward the driving unit 11.

### Configuration of feeding box

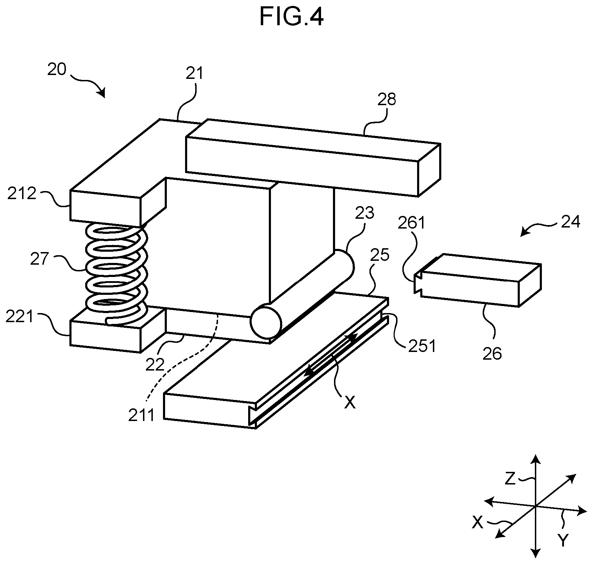

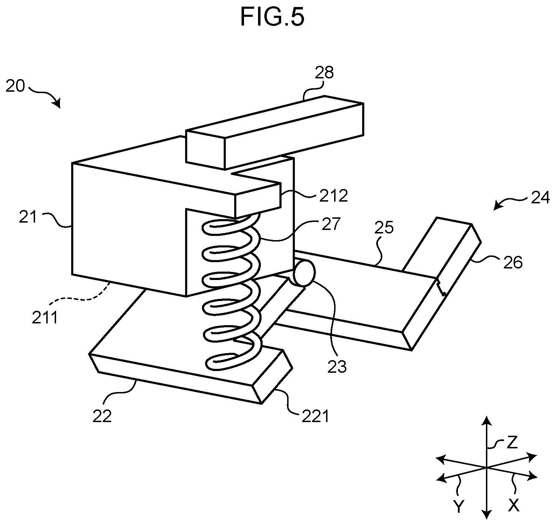

A configuration of the feeding box 20 will be described below with reference to FIG. 3 to FIG. 5. FIG. 3 to FIG. 5 are schematic perspective views illustrating the configuration of the feeding box 20. Meanwhile, FIG. 3 illustrates a state after the protruding piece 26 (to be described later) is attached. Further, FIG. 4 illustrates a state after the protruding piece 26 is attached. Furthermore, FIG. 5 illustrates a state in which a box main body 21 (to be described later) is opened.

As illustrated in FIG. 3 and FIG. 5, the feeding box 20 includes the box main body 21, a cover 22, a hinge portion 23, the protruding portion 24, a biasing unit 27, and a fixing portion 28. The box main body 21 is a rectangular box body (container) with a surface on a front side in a moving direction of the feeding box 20, that is, in the forward direction Z1 (see FIG. 2) and the backward direction Z2 (see FIG. 2), is opened.

The box main body 21 includes an opening portion 211 and a projecting portion 212. The opening portion 211 is formed on the surface of the box main body 21 on the front side in the forward direction Z1 and the backward direction Z2 as described above. The projecting portion 212 is a portion that protrudes laterally, and fixes one end portion of the biasing unit 27 (to be described later). The opening portion 211 of the box main body 21 faces downward when the feeding box 20 moves in the forward direction Z1. Further, the opening portion 211 of the box main body 21 faces upward when the feeding box 20 moves in the backward direction Z2.

The cover 22 is arranged on the front of the opening portion 211 of the box main body 21 so as to close the opening portion 211 of the box main body 21. Meanwhile, in the state in which the cover 22 is closed, fish food that is stored in the box main body 21 is not discharged from the box main body 21. Further, the cover 22 includes a projecting portion 221. The projecting portion 221 is a portion that protrudes laterally, and fixes another end portion of the biasing unit 27. The hinge portion 23 is arranged between the box main body 21 and the cover 22 and connects the cover 22 to the box main body 21 in an openable and closable manner.

The protruding portion 24 is arranged so as to protrude from the cover 22 in a direction that crosses the forward direction Z1. The protruding portion 24 is arranged so as to protrude from the cover 22 in the first orthogonal direction X that is perpendicular to the forward direction Z1. The protruding portion 24 includes an intermediate plate 25 and the protruding piece 26. The intermediate plate 25 is connected to the cover 22. The protruding piece 26 protrudes from the intermediate plate 25 in the first orthogonal direction **X.** The intermediate plate 25 is arranged between the cover 22 and the protruding piece 26, connects the cover 22 and the protruding piece 26, and presses the protruding piece 26.

The protruding piece 26 is arranged so as to protrude from a part of the intermediate plate 25 in the second orthogonal direction Y that is perpendicular to each of the forward direction Z1 (see FIG. 1) and the first orthogonal direction X. As illustrated in FIG. 4, the intermediate plate 25 includes, at a distal end face thereof, a gutter 251 that extends in the second orthogonal direction Y. The gutter 251 is formed in a certain shape in which a diameter increases from the distal end face of the intermediate plate 25 toward the first orthogonal direction X. The protruding piece 26 includes, at a base end face thereof, a projection 261 that extends in the second orthogonal direction Y. The projection 261 has a certain shape that conforms to the gutter 251, and is formed such that a diameter increases from the base end face of the protruding piece 26 toward the first orthogonal direction X.

The protruding piece 26 is attached to the intermediate plate 25 by inserting the projection 261 in the gutter 251 of the intermediate plate 25 from the second orthogonal direction Y. Therefore, the protruding piece 26 is slidable in the second orthogonal direction Y with respect to the intermediate plate 25. Further, because the protruding piece 26 is slidable in the second orthogonal direction Y with respect to the intermediate plate 25, the protruding piece 26 is capable of changing the position in the second orthogonal direction Y. In the present embodiment, the protruding piece 26 is capable of changing the position to three positions, such as one end portion, another end portion, and a middle portion, of the intermediate plate 25.

The biasing unit 27 is a tension coil spring. The biasing unit 27 is arranged between the projecting portion 212 of the box main body 21 and the projecting portion 221 of the cover 22. The biasing unit 27 biases the cover 22 toward a direction in which the box main body 21 is closed. The fixing portion 28 fixes the box main body 21 to an outer periphery of the rotary unit 14. One end portion of the fixing portion 28 is fixed to the box main body 21, and another end portion is fixed to the outer periphery of the rotary unit 14. Meanwhile, it is satisfactory for the biasing unit 27 to bias the cover 22 in a closing direction, and therefore, the biasing unit 27 is not limited to the tension coil spring, but may be, for example, a compression coil spring, a leaf spring, or the like.

As illustrated in FIG. 5, in the feeding box 20, when the protruding piece 26 is pressed, the cover 22 moves in an opening direction against the biasing force of the biasing unit 27. Accordingly, the opening portion 211 of the box main body 21 is opened and food is discharged from the box main body 21. Further, when pressing on the protruding piece 26 is released, the cover 22 moves in the closing direction with the aid of the biasing force of the biasing unit 27. Accordingly, the opening portion 211 of the box main body 21 is closed.

### Feed pattern in feeding apparatus

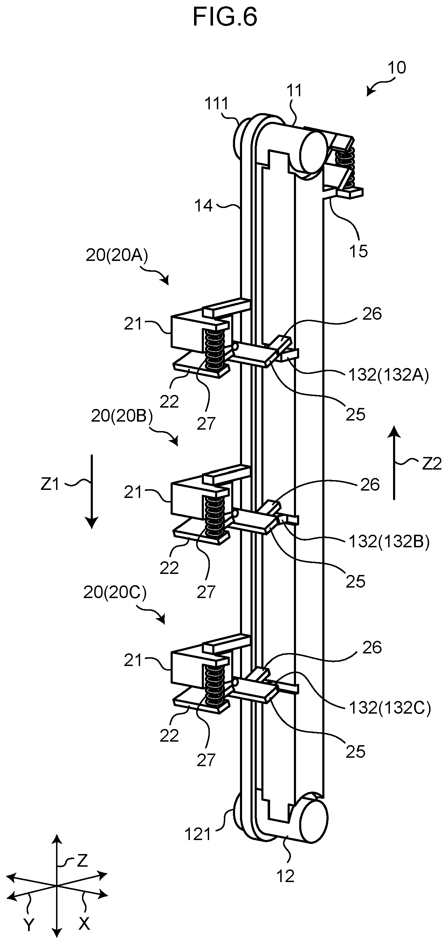

A feed pattern in the feeding apparatus 10 will be described below with reference to FIG. 6. FIG. 6 is a diagram for explaining the feed pattern in the feeding apparatus 10. Meanwhile, FIG. 6 illustrates a schematic perspective view of the feeding apparatus 10. Further, in FIG. 6, an example is illustrated in which the protruding pieces 26 of the three feeding boxes 20 (20A, 20B, and 20C) are arranged at different positions in the second orthogonal direction Y, and the three protruding pieces 26 at the different positions come into contact with the first protrusions 132 of the three opening portions 131.

As illustrated in FIG. 6, in the feeding box 20A, the protruding piece 26 is arranged at one end portion of the intermediate plate 25. In this case, the protruding piece 26 comes into contact with the first protrusion 132 that is arranged in the one end portion of the one surface 134 of the support unit 13. With this configuration, the cover 22 moves against the biasing force of the biasing unit 27, so that the box main body 21 is opened. Furthermore, in the feeding box 20B, the protruding piece 26 is arranged on one end portion of the intermediate plate 25. In this case, the protruding piece 26 comes into contact with the first protrusion 132 that is arranged in the middle portion of the one surface 134 of the support unit 13. With this configuration, the cover 22 moves against the biasing force of the biasing unit 27, so that the box main body 21 is opened. Moreover, in the feeding box 20C, the protruding piece 26 is arranged in the other end portion of the intermediate plate 25. In this case, the protruding piece 26 comes into contact with the first protrusion 132 that is arranged in the other end portion of the one surface 134 of the support unit 13. With this configuration, the cover 22 moves against the biasing force of the biasing unit 27, so that the box main body 21 is opened.

In this manner, by a combination of the positions of the protruding piece 26 and the first protrusion 132, for example, it is possible to feed food at each of the three positions (depths) in water W_{U} (see FIG. 1). Furthermore, for example, it is possible to feed food at one or two of the three positions (depths) in water W_{U} such that food is fed at the position of the feeding box 20A and the position of the feeding box 20C but the food is not fed at the position of the feeding box 20B.

### Food supply operation in feeding apparatus

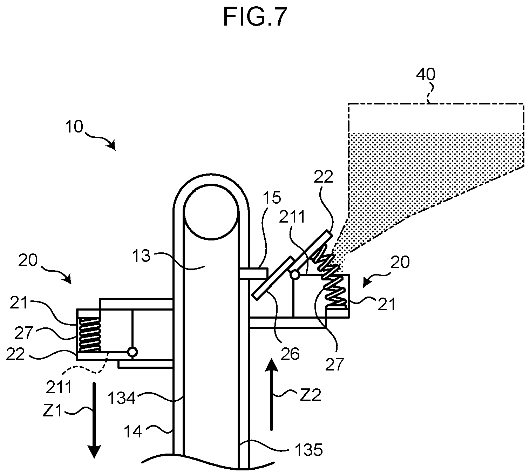

A food supply operation in the feeding apparatus 10 will be described below with reference to FIG. 7. FIG. 7 is a diagram for explaining the food supply operation in the feeding apparatus 10. Meanwhile, FIG. 7 schematically illustrates a side surface of the feeding apparatus 10.

As illustrated in FIG. 7, the feeding apparatus 10 includes a food supply mechanism. The food supply mechanism includes the above-described second protrusion 15 that is arranged on the backward path side of the feeding boxes 20. The second protrusion 15 is arranged above the water surface W_{S} (see FIG. 1) in the backward direction Z2 of the feeding boxes 20. The second protrusion 15 protrudes from the entire support unit 13 in the second orthogonal direction Y. Therefore, the second protrusion 15 comes into contact with the protruding piece 26 even when the protruding piece 26 is arranged at any position in the second orthogonal direction Y.

In the food supply mechanism, when the second protrusion 15 comes into contact with the protruding piece 26 of the feeding box 20 that moves in the backward direction Z2, the cover 22 moves against the biasing force of the biasing unit 27 and opens the box main body 21. The opening portion 211 of the box main body 21 that is opened is opened in an upward direction, so that it is possible to supply food to the opening portion 211 by dropping the food into the opening portion 211.

Meanwhile, when the food is supplied from the opening portion 211, for example, it may be possible to put the food from a food tank 40 that is arranged above the food supply mechanism. With this configuration, it is possible to automate supply of the food to the feeding boxes 20.

According to one embodiment as described above, the feeding apparatus 10 as described below is implemented.

The feeding apparatus 10 according to one embodiment includes the driving unit 11 that is arranged above the water surface W_{S} in a breeding farm for breeding fish, the driven unit 12 that is arranged in water W_{U} in the breeding farm, the support unit 13 that connects the driving unit 11 and the driven unit 12, the endless rotary unit 14 that is extended around the driving unit 11 and the driven unit 12 and that rotates between the driving unit 11 and the driven unit 12 with a driving force that is given from the driving unit 11, the feeding box 20 that is an openable and closable box body for storing food for the fish, that is attached to the rotary unit 14, and that moves back and forth between the driving unit 11 and the driven unit 12 with rotation of the rotary unit 14, and the opening portion 131 that is arranged on the support unit 13 at an arbitrary position in water and that opens, to feed the fish, the feeding box 20 that moves from the driving unit 11 to the driven unit 12.

According to one embodiment as described above, the feeding box 20 is opened by the opening portion 131 at an arbitrary position in water W_{U}, so that it is possible to feed the fish at an arbitrary position (depth) in water W_{U}. With this configuration, it is possible to feed the fish at an arbitrary depth (depth) in a fish breeding farm, such as a fish tank, in accordance with a situation, such as water temperature or an amount of dissolved oxygen, in which fish are gathered. Further, the feeding apparatus 10 is able to feed food to the fish at an arbitrary depth in accordance with a situation of the fish breeding farm, so that it is possible to contribute to achieve of the Goal 9 "Industry, innovation and infrastructure" of Sustainable Development Goals (SDGs).

Furthermore, in the feeding apparatus 10 according to one embodiment, the feeding box 20 includes the box main body 21 in which a front side in a moving direction of the feeding box 20 is opened, the cover 22 that closes the box main body 21, the hinge portion 23 that connects the cover 22 to the box main body 21 in an openable and closable manner, and the protruding portion 24 that protrudes from the cover 22 in a direction that crosses the forward direction Z1 of the moving direction, where the opening portion 131 includes the first protrusion 132 that protrudes in a direction that crosses the forward direction Z1 and that comes into contact with the protruding portion 24 with respect to the moving feeding box 20.

According to one embodiment as described above, the first protrusions 132 comes into contact with the protruding portion 24 that protrudes from the cover 22 with respect to the feeding box 20 that moves in the forward direction Z1, so that the cover 22 is pressed via the protruding portion 24 and the box main body 21 is opened due to the pressing of the cover 22. The food for the fish is discharged from the opened box main body 21. In this manner, according to the configuration as described above, it is possible to implement the mechanism that opens the feeding box 20 in water W_{U}, and it is possible to feed the fish at an arbitrary position (depth) in water W_{U}.

Moreover, in the feeding apparatus 10 according to one embodiment, the feeding box 20 includes the biasing unit 27 that biases the cover 22 in a direction in which the box main body 21 is closed.

According to one embodiment as described above, when the box main body 21 that is opened due to the contact of the protruding portion 24 with the first protrusion 132 further moves, and the protruding portion 24 crosses over the first protrusions 132 to release the contact with the first protrusions 132, the cover 22 is closed with the aid of the biasing force of the biasing unit 27. In other words, it is possible to automatically close the cover 22 when the food is discharged from the box main body 21.

Furthermore, in the feeding apparatus 10 according to one embodiment, the first protrusion 132 is attachable and detachable with respect to the support unit 13 and mountable at a plurality of positions in the forward direction Z1.

According to one embodiment as described above, the first protrusion 132 is attachable and detachable with respect to the support unit 13, and the position of the first protrusion 132 in the forward direction Z1 of the feeding boxes 20 is changeable, so that it is possible to arrange the opening portion 131 at an arbitrary position (depth) in water W_{U}, and it is possible to arrange the opening portion 131 at a plurality of positions (depths).

Moreover, in the feeding apparatus 10 according to one embodiment, the plurality of feeding boxes 20 are mounted on the rotary unit 14 in the forward direction Z1, the opening portion 131 includes the plurality of first protrusions 132, the plurality of first protrusions 132 are mounted on the support unit 13 at a plurality of positions in the forward direction Z1, and at least one of the first protrusions 132 comes into contact with the protruding portion 24.

According to one embodiment as described above, at least one of the first protrusions 132 comes into contact with the protruding portion 24, so that the plurality of feeding boxes 20 are opened at a set position (depth). Therefore, it is possible to continuously feed the fish at a constant depth.

Furthermore, in the feeding apparatus 10 according to one embodiment, the protruding portion 24 includes the intermediate plate 25 that is connected to the cover 22, and the protruding piece 26 that protrudes from the intermediate plate 25 in the first orthogonal direction X that is perpendicular to the forward direction Z1, the first protrusion 132 protrudes from the support unit 13 in the first orthogonal direction X that is perpendicular to the forward direction Z1 and protrudes from a part of the support unit 13 in the second orthogonal direction Y that is perpendicular to each of the forward direction Z1 and the first orthogonal direction X, and the protruding portion 24 protrudes from a part of the intermediate plate 25 in the second orthogonal direction Y and is capable of changing a position along the second orthogonal direction Y.

According to one embodiment as described above, by changing the position of the protruding piece 26, the fish is fed at the position of the first protrusion 132 that comes into contact with the protruding piece 26, and the feeding box 20 passes by without feeding the fish at the position of the first protrusion 132 that does not come into contact with the protruding piece 26. With this configuration, it is possible to continuously feed the fish at a constant depth, and easily change the depth at which the fish is fed.

Moreover, in the feeding apparatus 10 according to one embodiment, the protruding piece 26 is slidable in the second orthogonal direction Y with respect to the intermediate plate 25.

According to one embodiment as described above, the protruding piece 26 is slidable in the second orthogonal direction Y, so that it is possible to easily change the position along the second orthogonal direction **Y.**

Furthermore, in the feeding apparatus 10 according to one embodiment, the protruding portion 24 includes the intermediate plate 25 that is connected to the cover 22, and the protruding piece 26 that protrudes from the intermediate plate 25 in the first orthogonal direction X that is perpendicular to the forward direction Z1, the first protrusion 132 protrudes from the support unit 13 in the first orthogonal direction X that is perpendicular to the forward direction Z1, protrudes from a part of the support unit 13 in the second orthogonal direction Y that is perpendicular to each of the forward direction Z1 and the first orthogonal direction X, and is capable of changing a position along the second orthogonal direction Y.

According to one embodiment as described above, by changing the position of the first protrusion 132, the fish is fed at the position of the first protrusion 132 that comes into contact with the protruding piece 26, and the feeding box passes by without feeding the fish at the position of the first protrusion 132 that does not come into contact with the protruding piece 26. With this configuration, it is possible to continuously feed the fish at a constant depth, and easily change the depth at which the fish is fed.

Moreover, in the feeding apparatus 10 according to one embodiment, the first protrusion 132 is slidable in the second orthogonal direction Y with respect to the support unit 13.

According to one embodiment as described above, the first protrusion 132 is slidable in the second orthogonal direction Y, so that it is possible to easily change the position along the second orthogonal direction Y.

Furthermore, in the feeding apparatus 10 according to one embodiment, the support unit 13 includes the second protrusion 15 that is arranged above the water surface W_{S} in the backward direction Z2 of the moving direction of the feeding boxes 20, and that protrudes from the entire support unit 13 in the second orthogonal direction Y that is perpendicular to each of the backward direction Z2 and the first orthogonal direction X that is perpendicular to the backward direction Z2.

According to one embodiment as described above, the second protrusion 15 comes into contact with the protruding portion 24 that protrudes from the cover with respect to feeding box 20 that moves in the backward direction Z2, so that the cover 22 is pressed via the protruding portion 24 and the box main body 21 is opened due to the pressing of the cover 22. Further, in the backward movement of the feeding box 20, an upper side of the box main body 21 is opened, so that it is possible to supply food to the box main body 21 in this state.

Meanwhile, in one embodiment as described above, the driving pulley 111 is driven by the driving force of the driving motor 112 that is a driving source in the driving unit 11; however, when the feeding apparatus 10 has a compact size, for example, it may be possible to arrange a handle for rotating the driving pulley 111, and adopt human power of an operator or the like as the driving source, instead of the driving motor 112.

Furthermore, in one embodiment as described above, the protruding piece 26 is inserted into the gutter 251 from the second orthogonal direction Y so as to slide, but embodiments are not limited to this example, and, for example, it may be possible to mount the protruding piece 26 such that the position is changeable, by arranging a pin in the protruding piece 26, arranging holes corresponding to one end portion, another end portion, and a middle portion of the gutter 251, and inserting the pin of the protruding piece 26 to a corresponding hole.

Additional advantageous effects and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 10: feeding apparatus
- 11: driving unit
- 12: driven unit
- 13: support unit
- 14: rotary unit
- 20: feeding box
- 21: box main body
- 22: cover
- 23: hinge portion
- 24: protruding portion
- 25: intermediate plate
- 26: protruding piece
- 27: biasing unit
- 131: opening portion
- 132: first protrusion
- 15: second protrusion
- W_{S}: water surface
- W_{U}: in water
- X: first orthogonal direction
- Y: second orthogonal direction
- Z1: forward direction
- Z2: backward direction

## Claims

1. A feeding apparatus comprising:
a driving unit that is arranged above a water surface in a breeding farm for breeding fish;
a driven unit that is arranged in water in the breeding farm;
a support unit that connects the driving unit and the driven unit;
an endless rotary unit that is extended around the driving unit and the driven unit and that rotates between the driving unit and the driven unit with a driving force that is given from the driving unit;
a feeding box that is an openable and closable box body for storing food for the fish, that is attached to the rotary unit, and that moves back and force between the driving unit and the driven unit with rotation of the rotary unit; and
an opening portion that is arranged on the support unit at an arbitrary position in water and that opens, to feed the fish, the feeding box that moves from the driving unit to the driven unit.

2. The feeding apparatus according to claim 1, wherein
the feeding box includes
a box main body in which a front side in a moving direction of the feeding box is opened;
a cover that closes the box main body;
a hinge portion that connects the cover to the box main body in an openable and closable manner; and
a protruding portion that protrudes from the cover in a direction that crosses a forward direction of the moving direction, and
the opening portion includes a first protrusion that protrudes in a direction that crosses the forward direction and that comes into contact with the protruding portion with respect to the moving feeding box.

3. The feeding apparatus according to claim 2, wherein the feeding box includes a biasing unit that biases the cover in a direction in which the box main body is closed.

4. The feeding apparatus according to claim 3, wherein the first protrusion is attachable and detachable with respect to the support unit and mountable at a plurality of positions in the forward direction.

5. The feeding apparatus according to claim 4, wherein
the plurality of feeding boxes are mounted on the rotary unit in the forward direction,
the opening portion includes the plurality of first protrusions;
the first protrusions are mounted on the support unit at a plurality of positions in the forward direction respectively; and
at least one of the first protrusions comes into contact with the protruding portion.

6. The feeding apparatus according to claim 5, wherein
the protruding portion includes
an intermediate plate that is connected to the cover; and
a protruding piece that protrudes from the intermediate plate in a first orthogonal direction that is perpendicular to the forward direction, wherein
the first protrusion protrudes from the support unit in the first orthogonal direction that is perpendicular to the forward direction and protrudes from a part of the support unit in a second orthogonal direction that is perpendicular to each of the forward direction and the first orthogonal direction, and
the protruding piece protrudes from a part of the intermediate plate in the second orthogonal direction and is capable of changing a position along the second orthogonal direction.

7. The feeding apparatus according to claim 6, wherein the protruding piece is slidable in the second orthogonal direction with respect to the intermediate plate.

8. The feeding apparatus according to claim 5, wherein
the protruding portion includes
an intermediate plate that is connected to the cover; and
a protruding piece that protrudes from the intermediate plate in a first orthogonal direction that is perpendicular to the forward direction,
the first protrusion protrudes from the support unit in the first orthogonal direction that is perpendicular to the forward direction, protrudes from a part of the support unit in a second orthogonal direction that is perpendicular to each of the forward direction and the first orthogonal direction, and is capable of changing a position along the second orthogonal direction.

9. The feeding apparatus according to claim 8, wherein the first protrusion is slidable in the second orthogonal direction with respect to the support unit.

10. The feeding apparatus according to any one of claims 1 to 9, wherein the support unit includes a second protrusion that is arranged above the water surface in a backward direction of the moving direction of the feeding box, and that protrudes from the entire support unit in a second orthogonal direction that is perpendicular to the backward direction and a first orthogonal direction that is perpendicular to the backward direction.
